Europäisches Patentamt

European Patent Office

Office européen des brevets

(19)

(11) Veröffentlichungsnummer: **0 174 492 B1**

(12) **EUROPÄISCHE PATENTSCHRIFT**

(45) Veröffentlichungstag der Patentschrift: 20.03.91

(51) Int. Cl.⁵: **F16K 31/363**

(21) Anmeldenummer: 85109772.5

(22) Anmeldetag: 03.08.85

(54) Stromregelventil.

(30) Priorität: 12.09.84 DE 3433424

(43) Veröffentlichungstag der Anmeldung:
19.03.86 Patentblatt 86/12

(45) Bekanntmachung des Hinweises auf die
Patenterteilung:
20.03.91 Patentblatt 91/12

(84) Benannte Vertragsstaaten:
**DE FR GB IT**

(56) Entgegenhaltungen:
**DE-A- 3 246 899**
**DE-B- 1 034 488**
**DE-U- 7 116 557**
**DE-U- 7 428 678**
**US-A- 2 816 572**

(73) Patentinhaber: **ROBERT BOSCH GMBH**
**Postfach 50**
**W-7000 Stuttgart 1(DE)**

(72) Erfinder: **Zirps, Wilhelm, Ing. grad.**
**Immanuel-Kant-Strasse 9**
**W-7251 Hemmingen(DE)**

## Beschreibung

### Stand der Technik

Die Erfindung geht aus von einem Stromregelventil nach der Gattung des Hauptanspruchs. Aus dem DE-U-7 116 557 ist ein Stromregelventil bekannt, bei dem zwischen einer Zulauf- und mehreren Ablaufbohrungen eine gegen die Kraft einer Feder in Durchflußrichtung des Mediums verschiebbarer Ventilkörper angeordnet ist. Der Ventilkörper weist eine mittige Durchflußbohrung auf, die ständig geöffnet ist und die auf die bei maximal zulässigem Druck noch gewünschte Durchflußmenge abgestimmt ist. Der Ventilkörper verschließt somit nicht alle Öffnungen, so daß kein völliger Stop des Druckmittelflusses möglich ist.

In der US-A-2 816 572 wird ein Stromregelventil gelehrt, bei dem ein Ventilkörper mit mehreren Durchflußöffnungen abhängig vom Druckgefälle gegen einen elastischen Körper verschoben wird. Der elastische Körper weist eine relativ hohe Reibung auf, wodurch ein konstanter Druckmittelfluß nur schwer einzustellen ist. Die Elastizität des Körpers wird dadurch begrenzt, da er nicht in die Ablaufbohrung hineingedrückt werden darf. Das Ventil ist somit nicht für hohe Drücke geeignet. Ferner können die Bohrungen im Ventilkörper leicht durch Schmutzteilchen verstopft werden, was die Funktionsfähigkeit des Ventils beeinträchtigt. Die Ausbildung des Ventilkörpess umfasst eine mittige Durchflußbohrung und zwei aussenmittige Öffnungen oder alternetiv nur die aussermittige Öffnungen (Spalte 3, Zeilen 45 bis 49). Der Ventilkörper kann, in der alternativen Ausbildung, alle Öffnungen verschliessen, so daß ein völliger Stop des Druckmittelflusses möglich ist.

### Vorteile der Erfindung

Das erfindungsgemäße Stromregelventil mit den kennzeichnenden Merkmalen des Hauptanspruchs hat demgegenüber den Vorteil, daß es einfach und kompakt baut. Die Druckmittelmenge kann unabhängig vom Druck konstant gehalten werden. Es sind keine aufwendigen und teueren Feinbearbeitungen notwendig. Mit Hilfe des Dichtrings ist die Scheibe gleichzeitig zentriert und auch abgedichtet.

Durch die in den Unteransprüchen aufgeführten Maßnahmen sind vorteilhafte Weiterbildungen und Verbesserungen der im Hauptanspruch angegebenen Merkmale möglich.

Insbesondere nach Anspruch 5 ist es möglich, die Durchflußrichtung in einer Richtung zu regeln, während in der entgegegesetzten Richtung freier und weitgehend ungedrosselter Durchfluß möglich ist. Dadurch kann ein angeschlossener Verbraucher z.B. in der einen Richtung schnell angehoben und in der anderen Richtung langsam abgesenkt werden. Nach den Ansprüchen 6 bis 10 ist es ferner möglich, die Durchflußgröße des Druckmittels durch die Meßblende von außen her einzustellen. Dadurch sind beliebige Druckmittelströme möglich, so daß ein Verbraucher mit unterschiedlichen Absenkgeschwindigkeiten gesteuert werden kann.

### Zeichnung

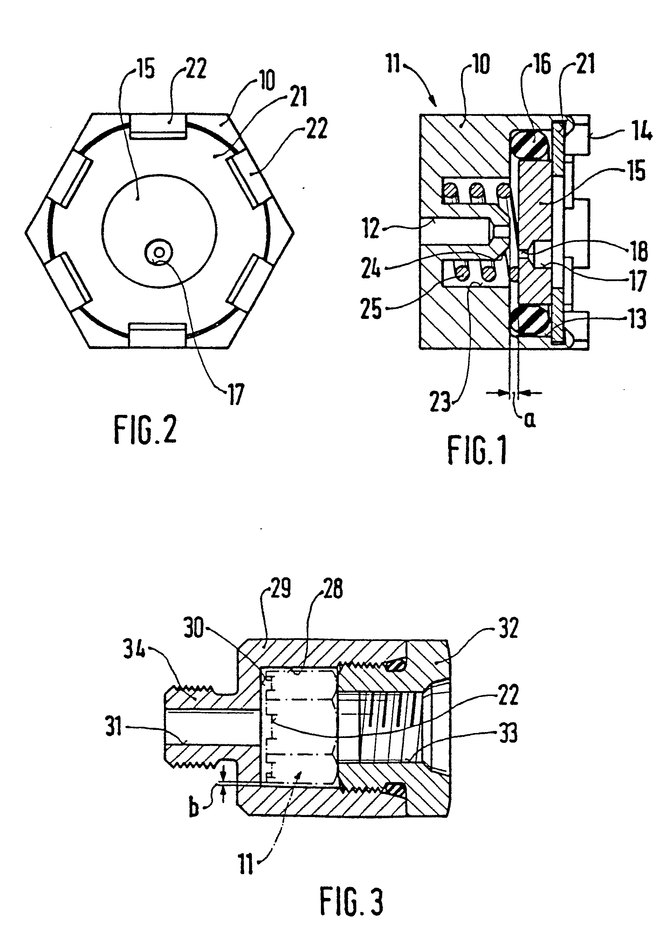

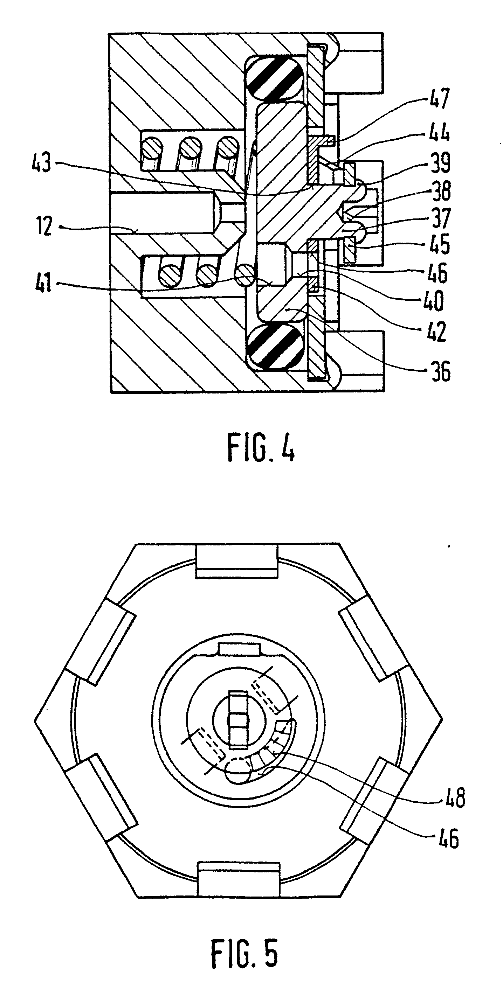

Ein Ausführungsbeispiel der Erfindung ist in der Zeichnung dargestellt und in der nachfolgenden Beschreibung näher erläutert. Es zeigen Figur 1 einen Längsschnitt durch ein Stromregelventil, Figur 2 eine Vorderansicht desselben, Figur 3 einen Längsschnitt durch eine Abwandlung des Ausführungsbeispiels nach Figur 1, Figur 4 eine zweite Abwandlung und Figur 5 eine Vorderansicht des Ausführungsbeispiels nach Figur 4.

### Beschreibung des Ausführungsbeispiels

In einem Gehäuse 10 eines Stromregelventils 11 ist eine mittige, einmal abgesetzte Abflußbohrung 12 ausgebildet. Diese mündet in eine zylindrische Ausnehmung 13, die zur einen Stirnseite 14 des Gehäuses 10 hin geöffnet ist. In der Ausnehmung 13 ist eine Drosselplatte 15 angeordnet, die an ihrem Außenumfang in einem Dichtring 16 gelagert ist. Dieser ist radial vorgespannt, so daß die Drosselplatte 15 in ihrer Lage in der Ausnehmung 13 zentriert und gleichzeitig abgedichtet ist. Die Drosselplatte 15 weist eine außermittige, als Meßblende dienende Stufenbohrung 17 auf, deren der Abflußbohrung 12 zugewandtes Bohrungsteil 18 den kleineren Durchmesser hat. Die Abflußbohrung 12 und die Stufenbohrung 17 sind so angeordnet, daß sie weder fluchten noch sich schneiden. Die Drosselplatte 15 liegt mit ihrer der Abflußbohrung 12 abgewandten Stirnseite an einem in der Öffnung der Ausnehmung 13 angeordneten Anschlagring 21 an und hat in der Ausnehmung 13 ein Spiel a. Der Anschlagring 21 ist durch sechs im Abstand von ca. 60° voneinander im Rand des Gehäuses 10 ausgebildeten Bördelkantenabschnitte 22 befestigt.

Im Bereich der Abflußbohrung 12 ist im Gehäuse 10 ein Ringraum 23 ausgebildet, der in die Ausnehmung 13 mündet. Die Längsachse des Ringraums 23 fällt mit der Achse der Abflußbohrung 12 zusammen. Der Übergang 24 vom Ringraum 23 zur Ausnehmung 13 ist angeschrägt. Im Ringraum 23 befindet sich eine Druckfeder 25, die mit ihrem einen Ende zentrisch an der Drosselplatte 15 anliegt und diese gegen den Anschlagring 21 drückt.

Strömt kein Druckmittel durch das Gehäuse 10 des Stromregelventils 11, so liegt die Drosselplatte 15 durch die Kraft der Druckfeder 25 am Anschlagring 21 an. Sobald Druckmittel durch das Stromregelventil 11 fließt, fällt an der als Meßblende dienenden Stufenbohrung 17 der Druck ab. Der wirksame Druckunterschied der auf die beiden Stirnseiten der Drosselplatte 15 wirkenden Drücke verschiebt die Drosselplatte 15 entgegen der Kraft der Druckfeder 25 zur Abflußbohrung 12 hin. Je weiter der Druckmittelstrom ansteigt, desto größer wird der wirksame Druckunterschied und somit die Kraft auf die Druckfeder 25. Dadurch wird das Spiel a kleiner, so daß der Abfluß des Druckmittels von der Ausnehmung 13 durch die Abflußbohrung 12 angedrosselt wird. Je mehr die Drosselplatte 15 zur Abflußbohrung 12 hin verschoben wird, desto stärker ist das abströmende Druckmittel angedrosselt. Die Abflußbohrung 12, die Druckfeder 25 und die Drosselplatte 15 wirken zusammen als sogenannte Druckwaage. Dadurch ist ein konstanter Druckmittelfluß unabhängig vom jeweils wirkenden Druck möglich. Es können eventuelle Druckschwankungen an einem angeschlossenen Verbraucher ausgeglichen werden.

Im Ausführungsbeispiel nach Figur 3 ist das Stromregelventil 11 im Innern 28 eines becherförmigen Gehäuseteils 29 angeordnet. Die Öffnung der Ausnehmung 13 des Stromregelventils 11 ist dabei dem Boden 30 des Gehäuseteils 29 zugewandt. Das Gehäuseteil 29 hat einen vom Boden 30 ausgehenden Fortsatz 34 in dem eine im Boden 30 mündende durchgehende Bohrung 31 ausgebildet ist. In die Öffnung des Gehäuseteils 29 ist ein zweites Gehäuseteil 32 eingeschraubt, das eine mittige, durchgehende Bohrung 33 aufweist. Das Gehäuseteil 32 ist soweit in das Gehäuseteil 29 eingeschraubt, daß das Gehäuse 10 des Stromregelventils 11 in Längsrichtung beweglich ist. Ferner ist es mit einem radialen Spiel b im Innern 28 des Gehäuseteils 29 angeordnet.

Strömt das Druckmittel über die Bohrung 31 in das Innere 28 des Gehäuseteils 29, so wird das Gehäuse 10 des Stromregelventils 11 vom Druck des Druckmittels an das Gehäuseteil 32 angedrückt. Dadurch ist kein Druckmittelfluß über das radiale Spiel b möglich, und das gesamte Druckmittel fließt - wie oben beschrieben - durch das Gehäuse 10 des Stromregelventils 11 in die Bohrung 33.

Strömt das Druckmittel in entgegengesetzter Richtung, also von der Bohrung 33 zur Bohrung 31, so wird das Gehäuse 10 des Stromregelventils 11 vom Druck des Druckmittels zum Boden 30 des Gehäuseteils 29 hin verschoben und liegt an diesem an. Das Druckmittel strömt nun weitgehend ungedrosselt sowohl über das radiale Spiel b und zwischen die Bördelkantenabschnitte 22 des Gehäuses 10 zur Bohrung 31 als auch zu einem kleineren Teil durch das Gehäuse 10 des Stromregelventils 11. Dadurch ist es möglich, den Druckmittelfluß in einer Richtung - von der Bohrung 31 zur Bohrung 33 - auf eine konstante Menge zu begrenzen. In der entgegengesetzten Richtung - von der Bohrung 33 zur Bohrung 31 - ist ein freier, nahezu ungedrosselter Durchfluß des Druckmittels möglich. Ist diese Anordnung z.B. in einer Hubvorrichtung eingebaut, so ist es möglich, die Hubvorrichtung schnell anzuheben und mit einer durch das Stromregelventil 11 begrenzten Absenkgeschwindigkeit abzusenken.

Das Ausführungsbeispiel nach Figur 4 entspricht weitgehend dem Ausführungsbeispiel nach Figur 1. Entsprechende Bauteile sind wieder mit gleichen Ziffern bezeichnet. Eine im Dichtring 16 angeordnete Drosselplatte 36 hat einen mittigen, der Abflußbohrung 12 abgewandten Zapfen 37. In dessen Ende befindet sich ein Schlitz 38, dessen Kanten 39 nach außen umgebördelt sind. In der Drosselplatte 36 ist eine außermittige Stufenbohrung 40 ausgebildet, deren Bohrungsteil 41 mit dem größeren Durchmesser der Abflußbohrung 12 zugewandt ist. Auf dem Zapfen 37 der Drosselplatte 36 ist eine Scheibe 42 angeordnet, deren mittige Bohrung 43 denselben Durchmesser wie der Zapfen 37 hat. An dieser Scheibe 42 befinden sich zwei federnde Lappen 44, die sich mit ihrem einen Ende an eine zweite, auf dem Zapfen 37 angeordneten Scheibe 45 anlegen. Dadurch liegt die zweite Scheibe 45 an den Kanten 39 und die erste Scheibe 42 an der Drosselplatte 36 an. Ferner ist im Bereich der Stufenbohrung 40 in der Scheibe 42 eine sichelförmige Ausnehmung 46 ausgebildet. Ihr maximaler Durchmesser entspricht dabei dem Durchmesser der Stufenbohrung 40 in der Drosselplatte 36. Am Rand der Scheibe 42 ist ein Lappen 47 angeordnet, durch den z.B. mit Hilfe eines Schraubenziehers die Scheibe 42 relativ zur Drosselplatte 36 verschoben werden kann. Dabei wird die Drosselplatte 36 mit Hilfe eines zweiten in den Schlitz 38 eingreifenden Schraubenziehers festgehalten. Im Bereich der sichelförmigen Ausnehmung 46 ist an der Scheibe 45 eine Skala 48 angebracht, mit deren Hilfe die nicht überdeckte Öffnung der Stufenbohrung 40 geeicht werden kann. Wird die Scheibe 42 relativ zur Drosselplatte 36 verdreht, so wird die Öffnungsweite der Stufenbohrung 40 von völlig geschlossen bis völlig geöffnet stufenlos verändert. Dadurch ist ein beliebiger Druckmittelfluß und somit eine beliebige Absenkgeschwindigkeit eines angeschlossenen Verbrauchers einstellbar.

**Ansprüche**

1. Stromregelventil mit einem zwischen einer Zulauf- (13) und einer Aflußbohrung (12) angeordneten und gegen die Kraft einer Feder (25) in Durchflußrichtung des Mediums verschiebbaren Ventilkörper (15), in dem mindestens eine vom Medium durchströmte Drosselöffnung (17) ausgebildet ist, wobei der Ventilkörper (15) die Abflußbohrung (12) steuert, wodurch ein konstanter Druckmittelfluß unabhängig vom jeweils wirkenden Druck möglich ist, und wobei die Drosselöffnung (17) derart gegenüber der Abflußbohrung (12) versetzt ist, daß ein völliger Verschluß der Abflußbohrung (12) möglich ist, dadurch gekennzeichnet, daß der Ventilkörper (15) an seinem Außenumfang in einem Dichtring (16) gelagert ist und abdichtend im Ventilgehäuse (10) ausschließlich vom Dichtring (16) geführt ist, daß die Drosselöffnung als Drosselbohrung (17) ausgebildet ist und daß die Achse bzw. Achsen der Drosselbohrung(en) (17) und die Achse der Abflußbohrung (12) mindestens um die Summe aus dem Radius der Drosselbohrung (17) und dem Radius der Abflußbohrung (12) gegeneinander versetzt sind.

2. Stromregelventil nach Anspruch 1, dadurch gekennzeichnet, daß der im Dichtring (16) gelagerte plattenförmige Ventilkörper (15) in einer Ausnehmung (13) im Gehäuse (10) des Stromregelventils (11) angeordnet ist, daß diese Ausnehmung (13) einen Ring (21) aufweist, der durch mehrere umgebördelte Kantenabschnitte (22) des Gehäuses (10) befestigt ist und an den der Ventilkörper (15) durch die Kraft der Feder (25) anliegt, daß zwischen Ventilkörper (15) und Abflußbohrung (12) ein Spiel (a) herrscht, daß die Abflußbohrung (12) etwa mittig zum Ventilkörper (15) ausgebildet ist, daß die Drosselstelle (17) im Ventilkörper (15) außermittig angeordnet ist und daß die Feder (25) parallel zur Abflußbohrung (12) verläuft und zentrisch am Ventilkörper (15) anliegt.

3. Stromregelventil nach Anspruch 1 und/oder 2, dadurch gekennzeichnet, daß das Gehäuse (10) des Stromregelventils (11) in einem zweiten, mehrteiligen Gehäuse (29, 32) in Längsrichtung beweglich und mit einem radialen Spiel (a) angeordnet ist und daß dieses zweite Gehäuse (29, 32) eine Zufluß- (31) und eine Abflußbohrung (33) aufweist.

4. Stromregelventil nach einem der Ansprüche 1 bis 3, dadurch gekennzeichnet, daß auf der der Feder (25) abgewandten Seite einer Platte (36) ein Zapfen (37) angeordnet ist, auf dem sich eine eine Ausnehmung (46) aufweisende erste Scheibe (42) befindet und daß diese Ausnehmung (46) mit einer Drosselstelle (40) in der Platte (36) in Wirkverbindung steht.

5. Stromregelventil nach Anspruch 4, dadurch gekennzeichnet, daß die Ausnehmung (46) der ersten Scheibe (42) sichelförmig ausgebildet ist und an ihrer größten Stelle einen mindestens dem Durchmesser der Drosselstelle (40) entsprechenden Durchmesser aufweist.

6. Stromregelventil nach Anspruch 4 und/oder 5, dadurch gekennzeichnet, daß im Zapfen (37) der Platte (36) ein Schlitz (38) ausgebildet ist, dessen Kanten (39) umgebördelt sind, daß an diesen umgebördelten Kanten (39) eine zweite Scheibe (45) angeordnet ist und daß die erste Scheibe (42) mehrere elastische Elemente (44) aufweist, die an der zweiten Scheibe (45) anliegen.

7. Stromregelventil nach einem der Ansprüche 4 bis 6, dadurch gekennzeichnet, daß auf der zweiten Scheibe (45) eine der Ausnehmung (46) der ersten Scheibe (42) zugeordnete Skala (48) angeordnet ist.

8. Stromregelventil nach einem der Ansprüche 4 bis 7, dadurch gekennzeichnet, daß an der ersten Scheibe (42) ein Element (47) angeordnet ist, mit dessen Hilfe diese erste Scheibe (42) relativ zur Platte (36) drehbar ist.

## Claims

1. Flow control valve having a valve body (15) arranged between an inlet bore (13) and an outlet bore (12) and displaceable against the force of a spring (25) in the through-flow direction of the medium, in which at least one throttle orifice (17), through which the medium flows is formed, the valve body (15) controlling the outlet bore (12) by means of which a constant flow of the pressure medium is possible regardless of the respectively acting pressure, and in which the throttle orifice (17) is displaced in relation to the outlet bore (12) in such a way that a complete closure of the outlet bore (12) is possible, characterized in that the valve body (15) is mounted at its outer circumference in a sealing ring (16) and is guided in a sealing manner in the valve housing (10), exclusively by the sealing ring (16), in that the throttle orifice is constructed as throttle bore (17), and in that the axis or axes of the throttle bore (s) (17) and the axis of the outlet bore (12) are displaced in relation to one another by at least the sum of the radius of the throttle bore (17) and the radius of the outlet bore (12).

2. Flow control valve according to Claim 1, characterized in that the plate-shaped valve body (15) mounted in the sealing ring (16) is arranged in a recess (13) in the housing (10) of the flow control valve (11), in that this recess (13) has a ring (21) which is fastened by means of a plurality of beaded edge sections (22) of the housing (10) and against which the valve body (15) rests due to the force of the spring (25), in that a degree of play (a) prevails between valve body (15) and outlet bore (12), in that the outlet bore (12) is formed approximately centrally in relation to the valve body (15), in that the throttle point (17) in the valve body (15) is arranged off-centre and in that the spring (25) extends in parallel to the outlet bore (12) and rests centrally against the valve body (15).

3. Flow control valve according to Claim 1 and/or 2, characterized in that the housing (10) of the flow control valve (11) is arranged in a second, multi-part housing (29, 32) to be moveable in the longitudinal direction and with a degree of radial play (a), and in that this second housing (29, 32) has an inlet bore (31) and an outlet bore (33).

4. Flow control valve according to one of Claims 1 to 3, characterized in that on the side, facing away from the spring (25), of a plate (36) a lug (37) is arranged on which a first disc (42) having a recess (46) is located, and in that this recess (46) is in operative connection with a throttle point (40) in the plate (36).

5. Flow control valve according to Claim 4, characterized in that the recess (46) of the first disc (42) is sickle-shaped and has at its largest point a diameter corresponding at least to the diameter of the throttle point (40).

6. Flow control valve according to Claim 4 and/or 5, characterized in that in the lug (37) of the plate (36) there is a slot (38) the edges (39) of which are beaded, in that a second disc (45) is arranged at these beaded edges (39), and in that the first disc (42) has a plurality of elastic elements (44) which rest against the second disc (45).

7. Flow control valve according to one of Claims 4 to 6, characterized in that a scale (48) assigned to the recess (46) of the first disc (42) is arranged on the second disc (45).

8. Flow control valve according to one of Claims 4 to 7, characterized in that an element (47) with the aid of which this first disc (42) can be rotated relative to the plate (36) is arranged on the first disc (42).

**Revendications**

1. Soupape de réglage du débit, avec un corps de soupape (15) disposé entre un perçage d'arrivée (13) et un perçage d'évacuation (12) et susceptible d'être déplacée contre l'action d'un ressort (25) dans la direction d'écoulement du fluide, corps de soupape dans lequel est réalisé au moins un orifice d'étranglement (17) parcouru par le fluide, le corps de soupape (15) commandant le perçage d'évacuation (12), grâce a quoi un débit de fluide sous pression constant, indépendant de la pression respectivement agissante, est possible, tandis que l'orifice d'étranglement (17) est décalé par rapport au perçage d'évacuation (12) de façon à ce qu'une fermeture complète du perçage d'évacuation (12) soit possible, soupape de réglage du débit caractérisée en ce que le corps de soupape (15) est monté à sa périphérie externe dans une bague d'étanchéité (16) et est guidé dans le boîtier (10) de la soupape a l'exclusion de la bague d'étanchéité (16), en ce que l'orifice d'étranglement est réalisé sous la forme d'un perçage d'étranglement (17), et en ce que l'axe ou bien les axes de l'orifice d'étranglement ou des orifices d'étranglement (17) et l'axe du perçage d'évacuation (12) sont décalés entre eux au moins de la somme du rayon du perçage d'étranglement (17) et du rayon du perçage d'évacuation (12).

2. Soupape de réglage du débit selon la revendication 1, caractérisée en ce que le corps de soupape (15) en forme de plaque montée dans la bague d'étanchéité (16) est disposé dans un évidement (13) du boîtier (10) de la soupape de réglage du débit (11), en ce que cet étranglement (13) comporte un anneau (21) qui est fixé par plusieurs parties de bordure serties (22) du boîtier (10) et qui s'applique sous l'action du ressort (25) contre le corps de soupape (15), en ce qu'entre le corps de soupape (15) et le perçage d'évacuation (12) existe un jeu (a), en ce que le perçage d'évacuation (12) est à peu près centré sur le corps de soupape (15), en ce que le point d'étranglement (17) dans le corps de soupape (15) est excentré, et en ce que le ressort (25) s'étend parallèlement au perçage d'évacuation (12) et s'applique au centre du corps de soupape (15).

3. Soupape de réglage du débit selon la revendication 1 et/ou la revendication 2, caractérisée en ce que le boîtier (10) de la soupape de réglage du débit (11) est mobile en direction longitudinale dans un second boîtier en plusieurs parties (29, 32), où il est disposé avec un jeu radial (b), et en ce que ce second boîtier (29, 32) comporte un perçage d'arrivée (31) et un perçage d'évacuation (33).

4. Soupape de réglage du débit selon une des revendications 1 à 3, caractérisée en ce que sur la face opposée au ressort (25) d'une plaque (36) est disposé un téton (37) sur lequel se trouve un premier disque (42) comportant un évidement (46), et en ce que cet évidement (46) est en liaison fonctionnelle avec un point d'étranglement (40) dans la plaque (36).

5. Soupape de réglage du débit selon la revendication 4, caractérisée en ce que l'évidement (46) du premier disque (42) est en forme de croissant et à son extrémité la plus large comporte un diamètre correspondant au moins au diamètre du point d'étranglement (40).

6. Soupape de réglage du débit selon la revendication 4 et/ou la revendication 5, caractérisée en ce que sur le téton (37) de la plaque (36) est ménagée une fente (38) dont les bords (39) sont sertis, en ce qu'un second disque (45) est disposé contre ces bords sertis (39) et en ce que le premier disque (42) comporte plusieurs éléments élastiques (44) qui s'appliquent contre le second disque (45).

7. Soupape de réglage du débit selon l'une des revendications 4 à 6, caractérisée en ce que sur le second disque (45) est disposée une échelle (48) associée à l'évidement (46) du premier disque (42).

8. Soupape de réglage du débit selon l'une des revendications 4 à 7, caractérisée en ce que sur le premier disque (42) est disposé un élément (47) à l'aide duquel le premier disque (42) est susceptible de tourner par rapport à la plaque (36).

FIG.2

FIG.1

FIG.3

EP 0 174 492 B1

FIG. 4

FIG. 5

8